# EUROPEAN PATENT APPLICATION

(11) **EP 4 021 034 A1**
(43) Date of publication of application: **29.06.2022**
(21) Application number: 20216555.1
(22) Date of filing: 22.12.2020
(51) Int. Cl.: H04W 4/80

(54) **SHORT-RANGE COMMUNICATION DEVICE AND SYSTEM AND METHOD FOR ESTABILISHING A SHORT-RANGE COMMUNICATION**

(71) Applicant: 3M Innovative Properties Company, Saint Paul, MN 55133-3427 (US)
(72) Inventor: Graves, Jason, Darlington, County Durham, DL2 3QY (GB); Watson, Benjamin, Odiham, Hampshire, RG291AB (GB); Wright, John Clifford, High Wycombe, Bucks, HP12 3HT (GB); Mohammed, Parfes, Reading, Berkshire, RG30 1BS (GB); Urban, Henning, 33152 Värnamo (SE); Mangam, Abel Gladstone, 33154 Värnamo (SE); Henderson, Christopher, High Shincliffe, Durham, DH1 2PE (GB); Thompson, Darin, Huntersville, NC 28078 (US); Billingsley, Britton, St. Paul, MN, 55105 (US)
(74) Representative: Vollmers, Hans-Gerd

(57) **Abstract**

The present disclosure relates to a short-range communication device (10, 10', 10") for a personal protective equipment or a personal protective device (200, 210, 220, 230) comprising a transmission unit (20, 20', 20") for wirelessly transmitting a voice signal of a user (100, 110, 120, 130, 140, 150, 160) to a receiving unit (40, 40', 40") over a predetermined distance such that a communication channel is established between the transmission unit (20, 20', 20") and the receiving unit (40, 40', 40") so that a user (100, 110, 120, 130, 140, 150, 160) can hear the voice signal. The present disclosure further relates to a short-range communication system comprising at least two short-range communication devices (10, 10', 10") according to the present disclosure and to a method of establishing a short-range communication between such devices (10, 10', 10"). The short-range communication device (10, 10', 10") provides for a communication system for the use with personal protective equipment or personal protective devices (200, 210, 220, 230) with an easy and reliable communication and avoids or minimizes the risk of muffled speech of users wearing a personal protective device (200) such as a respirator (200).

## Description

The present disclosure relates to a short-range communication device for personal protective equipment or a personal protective device. The present disclosure further relates to a short-range communication system and to a method of establishing a short-range communication between such devices.

Many work environments include hazards that may expose people working within a given environment to a safety event, such as a fall, breathing contaminated air, or temperature related injuries (e. g., heat stroke, frostbite, etc.). In many work environments workers may utilize personal protective equipment (PPE) to help mitigate the risk of a safety event. Often, a worker may not recognize an impending safety event until the environment becomes too dangerous or the worker's health deteriorates too far.

Generally, a respirator mask includes a mask body comprising a contaminant capture device configured to remove contaminants from an air stream. Such respirators are known as negative pressure respirators. With respirators of this type, filtered air is drawn into the enclosed space between the inside of the respirator and a wearer's face through a filter system by the wearer's breathing action. To ease the breathing operation, in particular the exhalation, respirators have been developed having an exhalation valve opening upon exhalation to facilitate exhaustion of the exhaled air from the respirator.

When wearing a respirator, there might still be the need for the wearer or user to communicate to others. Such a need may be satisfied, for example, when the user wears other type of personal protective equipment, e. g. a hearing protection device with an active voice transmission comprising a microphone, a loudspeaker and a transmission unit sending a voice signal to others and/or receiving voice signals from others and playing this to the user. However, wearing the respirator may lead to a muffled or damped speech due to the fact that the user's voice signal needs to percolate through the material of the respirator filter system. A solution to this problem is, for example, described in WO 2018/095707 A1, where a microphone is arranged near the mouth of a user wearing a respirator which wirelessly transmits the user's voice signal to a remote audio unit. Although such systems may eliminate the affection of the voice signal by the respirator, it might not be required or desired to send the voice signal to many others even in a greater environment as this is not the case when speaking without a respirator. Sending the voice signal to everybody in this greater environment may even disturb those not involved in a particular working interaction.

Therefore, a need exists to provide a communication device that overcomes the disadvantages of the existing solutions. It is therefore an object of the present disclosure to provide a communication system for a personal protective equipment or personal protective device such as a respirator with an easily and reliable communication.

In a first aspect, the present disclosure relates to a short-range communication device being attachable to a personal protective equipment or a personal protective device. The short-range communication device comprises a transmitting unit comprising a microphone for picking up a voice signal of a user and a transmitter configured to wirelessly transmit the voice signal. The short-range communication device further comprises a receiving unit comprising at least one loudspeaker for playing an audio signal to the user and a receiver configured to receive the voice signal. The transmitter is configured to wirelessly transmit the voice signal to the receiver. The receiver is configured to receive a voice signal transmitted from the transmitter. The transmission unit and the receiving unit are configured to establish a communication channel between each other at a distance relative to each other which is equal to or less than a predetermined distance. In other words, the played audio signal represents the voice signal as picked up by the microphone. It is conceivable, that - in the presence of several short-range communication devices according to the present disclosure - that the transmission unit transmits the voice signal to more than one receiving unit as well and that the receiving unit receives the voice signal from more than one transmission unit at a time. The advantage of such a short-range communication device is that an easy and reliable communication is established at a short-range between individuals. The short-range communication device further eliminates the affection to the voice signal by the personal protective equipment or personal protective device. Furthermore, the short-range communication device may eliminate the need to wear a hearing protection device with active communication devices having a microphone, a loudspeaker and a transmission system to wirelessly transmit the voice signal and may help to keep a communication as natural as possible.

In a second aspect, the present disclosure relates to a short-range communication system comprising at least two short-range communication devices according to the present disclosure. The at least two short-range communication devices are in communication with each other being at a distance relative to each other which is equal to or less than a predetermined distance. In other words, the transmitter of the first short-range communication device is in communication with the receiver of the second short-range communication device and, in turn, the receiver of the first short-range communication device is in communication with the transmitter of the second short-range communication device. Consequently, the played audio signal represents the voice signal as picked up by the microphone. Irrespective of the above-mentioned communication, it is to be noted that the receiver of the first short-range communication device also receives the voice signal from the transmitter of the first short-range communication device and, in turn, noted that the receiver of the second short-range communication device also receives the voice signal from the transmitter of the second short-range communication device. The at least two short-range communication devices are not in contact with each other being at a distance relative to each other which is larger than the predetermined distance. The advantage of such a system with at least two short-range communication devices is that an easy and reliable communication is established at a short-range between individuals. The system with at least two short-range communication devices further eliminates the affection to the voice signal by the personal protective equipment or personal protective device. Furthermore, the system with at least two short-range communication devices may eliminate the need to wear a hearing protection device with active communication devices having a microphone, a loudspeaker and a transmission system to wirelessly transmit the voice signal and may help to keep a communication as natural as possible. It is conceivable, that - in the presence of several short-range communication devices according to the present disclosure - that the transmission unit transmits the voice signal to more than one receiving unit as well and that the receiving unit receives the voice signal from more than one transmission unit at a time. It is also conceivable that - in the presence of a multitude of short-range communication devices according to the present disclosure - that the short-range communication devices are configured such that a prioritization is achieved. For example, if one transmission unit transmits a voice signal to one or more receiving units, no other transmission unit can transmit a voice signal to any of the receiving units. Groups or clusters may be formed to facilitate the prioritization. Such a prioritization may help to simplify the communication between several users.

In a third aspect, the present disclosure relates to a method of establishing a short-range communication. The method comprises the step of providing at least two short-range communication devices each comprising a transmitting unit comprising a microphone for picking up a voice signal of a user and a transmitter configured to wirelessly transmit the voice signal, a receiving unit comprising at least one loudspeaker for playing an audio signal to the user and a receiver configured to receive the voice signal. The transmitter is configured to wirelessly transmit the voice signal to the receiver. The receiver is configured to receive a voice signal transmitted from the transmitter. The transmission unit and the receiving unit are configured to establish a communication channel between each other at a distance relative to each other which is equal to or less than a predetermined distance. The method further comprises the step of establishing a communication channel between the transmission units and the receiving units of the two short-range communication devices to each other at a distance between the short-range voice transmission devices equal to or less than a predetermined distance. In other words, the transmitter of the first short-range communication device is in communication with the receiver of the second short-range communication device and, in turn, the receiver of the first short-range communication device is in communication with the transmitter of the second short-range communication device. Consequently, the played audio signal represents the voice signal as picked up by the microphone. Irrespective of the above-mentioned communication, it is to be noted that the receiver of the first short-range communication device also receives the voice signal from the transmitter of the first short-range communication device and, in turn, noted that the receiver of the second short-range communication device also receives the voice signal from the transmitter of the second short-range communication device. The advantage of such a method of establishing a short-range communication is that an easy and reliable communication is established at a short-range between individuals. The method of establishing a short-range communication further eliminates the affection to the voice signal by the personal protective equipment or personal protective device. Furthermore, the method of establishing a short-range communication may eliminate the need to wear a hearing protection device with active communication devices having a microphone, a loudspeaker and a transmission system to wirelessly transmit the voice signal and may help to keep a communication as natural as possible.

Short-range communication within the meaning of the present disclosure is understood as establishing a communication over a short distance. Typically, the short-distance may depend on the transmission technology and is a value in the range of 0,1 to 3,5 m, preferably 0,5 to 2,5 m. The distance may depend on the transmitter and receiver of the communication device. It is also conceivable to limit the distance to a certain value within this range, even if the physical properties would allow for a greater distance. Such a limitation would represent a "whisper mode" and may be useful to the extent that only communication devices in such a limited distance to each other establish a communication. This may be of particular advantage in a crowded and noisy working environment, where only some dedicated users of such communication devices are intended to be reached and not the entirety of the users or workers, respectively. It is also conceivable to have a lower limit for a distance under which no communication channel is established, e. g. 1 m. In other words, a communication channel will only be established at distances between 1 m and the maximum distance of 3,5 m. Such a lower limitation would represent a "shout mode" and may be useful to reach out to other users not being so closely located to the user as compared to in the whisper mode.

A transmission unit of a communication device within the meaning of the present disclosure is understood as a separate, preferably self-contained unit comprising a microphone and a transmitter. Typically, the transmitter is a sender for sending a voice signal of a user of the device captured by the microphone to another device or unit.

A receiving unit of a communication device within the meaning of the present disclosure is understood as a separate, preferably self-contained unit comprising a loudspeaker and a receiver. Typically, the receiver receives a voice signal from a transmitter of another device or unit and the loudspeaker is configured to play an audio signal to a user of the device.

Predetermined distance within the meaning of the present disclosure is understood as a distance at or under which a communication between communication devices will be established. In turn, above the predetermined distance, no communication is established between such devices. The predetermined distance may be limited and/or adjusted by physical or technical aspects, e. g. dependent on the communication protocol, or on a manual or automatic limitation by a user or a device, respectively.

Near field magnetic induction (NFMI) is a short range, digital, wireless physical layer that facilitates communication with a low-power, non-propagating magnetic field between devices. NFMI technology allows for a control unit to form a shorter-range network, often with a range of less than 2 meters, that each personal protective equipment or personal protective device associated with an individual can join. However, while NFMI is one example of a network protocol that can be used for a personal area network (PAN), other wireless protocols may also be suitable.

Bluetooth Low Energy (BTLE) is a wireless personal area network for communication between electronic devices using a Bluetooth signal. Typically, BTLE works over a short-range distance and may work up to 10 m distance. This distance may be reduced due to a specific set up of the devices and the transmission energy settings.

In one embodiment, the transmission unit and/or the receiving unit of the short-range communication device are each contained in a separate housing. The advantage of such separate housed units is that these can easily be handled and positioned by a user. Typically, such housings may be made of a rigid material in order to protect the components against mechanical impact. Suitable materials for such housing may include Polystyrene, ABS, Polypropylene, Polyethylene. It is also conceivable that the housing is made of a semi-rigid or flexible material. The transmission unit and/or the receiving unit may by embedded into flexible wearables such as, for example, clothing or parts thereof. Such housings may be formed by a vacuum forming process or by an injection molding process, which provide for a cost-effective and reliable manufacturing method.

In a further embodiment, the housing of the transmission unit and/or of the receiving unit may be waterproof or watertight. For example, such a housing may fulfill the requirement of IP 67 or IP 68 of the IP Code (Ingress Protection Code or International Protection Code) according to IEC standard 60529 published by the International Electrotechnical Commission (IEC). An equivalent European standard would be EN 60529. Such a waterproof or watertight housing has the advantage that the short-range communication device can be used outside even under severe weather conditions.

In another embodiment, the transmission unit and/or the receiving unit of the short-range communication device comprises attachment means for attaching the transmission unit and/or the receiving unit to a personal protective equipment or a personal protective device, wherein the attachment means preferably comprise mechanical fasteners, adhesive fasteners or a combination thereof. Suitable adhesives may include pressure-sensitive adhesives (PSA), or hotmelt adhesives. Suitable mechanical fasteners may include hook and look systems, e. g. 3M^{™} Dual Lock^{™} as commercially available from 3M Company, St. Paul/MN in the US. The advantage of such attachment means is that the transmission unit and/or the receiving unit can easily and reliably be positioned and attached to personal protective equipment or devices worn or used by a user, e. g. at work.

In a certain embodiment, the attachment means of the short-range communication device comprises a clip, a clamp, a snap-fit means, a hook, a carabiner, a ring, a grommet, a threaded fastener or a combination thereof. The advantage of such attachment means is that these provide for an easy and reliable way of attachment as well as that these are releasable.

In a certain embodiment, the attachment means of the short-range communication device comprise releasable attachment means such that the transmission unit and/or the receiving unit is detachable after attachment. The advantage of such releasable attachment means is that the units may be re-positioned and/or re-used after an initial attachment or use. Suitable releasable attachment means may include mechanical fasteners or adhesive fasteners using a repositionable adhesive.

In a certain embodiment, the attachment means of the short-range communication device comprise non-releasable attachment means such that the transmission unit and/or the receiving unit is permanently fixed after attachment. The advantage of such non-releasable attachment means is that the units may be reliably attached and secured such that the risk of an unintentional detachment may be reduced or avoided. Suitable non-releasable attachment means typically include adhesives, welding, soldering, riveting, bolting, sewing, cold pressing or molding. Although such attachment means may be preferred for a non-releasable attachment, it is also conceivable that mechanical fasteners are used for a non-releasable or permanent attachment.

In a certain embodiment, the attachment means of the short-range communication device comprises releasable and non-releasable attachment means. For example, the transmission unit of the short-range communication device may comprise a releasable attachment means, and the receiving unit of the short-range communication device may comprise a non-releasable attachment means. Other combinations are conceivable as well. The advantage of a combination of releasable and non-releasable attachment means is that the attachment can be done according to specific user needs, e. g. if one unit needs detachment, whereas the other unit needs permanent attachment.

In a further embodiment, the transmission unit of the short-range communication device is attached to a personal protective equipment or personal protective device spaced apart from the receiving unit. The advantage of such an arrangement is that the transmission unit may be attached specifically to the user's needs, e. g. close to the mouth to enhance the capture of the voice signal by the microphone of the transmission unit, whereas the receiving unit may be placed at another location such that it does not disturb the user, e. g. in a pocket of clothing worn by the user or with a lanyard worn around the user's neck.

In yet a further embodiment, the transmission unit of the short-range communication device is attached to a respirator, preferably to the outer surface of the respirator. The respirator may be a disposable respirator or a re-usable respirator. Typically, respirators are cup-shaped and comprise filter media for filtering the inhaled air from impurities. It is also conceivable that such respirators comprise an exhalation valve for facilitating to easily move the exhaled air out of the respirator. The advantage of a transmission unit attached to a respirator is that the voice signal may reliably be captured for further transmission while wearing a respirator, which may otherwise lead to a muffled and damped voice signal. The advantage of attaching the transmission unit to the outer surface is that there is no impact to the user wearing the respirator when breathing.

In still a further embodiment, the transmission unit and/or the receiving unit of the short-range communication device is attached to a welding shield, preferably to the inner surface of the welding shield. The advantage of a transmission unit attached to a welding shield is that the voice signal may reliably be captured for further transmission while wearing a welding shield, which may otherwise lead to a muffled and damped voice signal when communicating during wearing of such a welding shield.

In another embodiment, the transmission unit and/or the receiving unit of the short-range communication device is attached to a protective helmet. The advantage of a transmission unit attached to a protective helmet is that the transmission unit may be arranged sufficiently close to the user's mouth thereby for capturing the voice signal of the user. The advantage of a receiving unit arranged at a protective helmet is that the loudspeaker of the receiving unit is positioned sufficiently close to the user's ear thereby for recognizing the audio signal by the user.

In yet another embodiment, the transmission unit and/or the receiving unit of the short-range communication device is attached to a protective jacket, preferably to the outer surface of the protective jacket. The advantage of such an arrangement is that the units of the short-range communication device are easily and reliably arranged according to the user's needed thereby, in particular at a position to allow a user to hear the audio signal of the receiving unit well enough or at a position such that the transmission unit captures the voice signal well enough.

In still another embodiment, the transmission unit and/or the receiving unit of the short-range communication device comprises a power supply. The advantage of arranging a power supply with the units is that they may work independently from an external power supply or source and would allow for a higher degree of freedom of movement because no external power supply needs to be connected to the units. Such a power supply may comprise a battery, for example a rechargeable battery.

In a further embodiment, the transmission unit comprises a visual indicator configured to provide a visual indication that the microphone of the transmission unit is picking up a voice signal. For example, the visual indicator may comprise a light emission diode (LED). It is conceivable to arrange more than one LED, for example a red LED to indicate that the user is speaking and a green LED indicating that the user is not speaking, i. e. being in a listening mode. Such a visual indication may help to enhance the communication such that another user being close to the user can recognize whether the user is speaking or not reducing or avoiding speech overlap thereby.

In another embodiment, the transmission unit and/or the receiving unit of the short-range communication device is arranged in a pocket. For example, such a pocket may be attached to a lanyard or a belt worn by the user. The pocket may comprise a shock-absorbing material and/or a water-resistant material. Such a pocket may be advantageous in that it helps to protect the transmission unit and/or the receiving unit against mechanical impact or outer impact such as moisture or the like.

In one embodiment, the receiving unit of the short-range communication device is spaced from the user's ear. Preferably, the receiving unit is spaced about 20 - 50 cm from the user's ear. For example, the receiving unit with its loudspeaker may be placed in a pocket of protective clothing. This may be advantageous because an irritation of a too noisy loudspeaker too close to the user's ear is reduced or avoided thereby.

In another embodiment, the short-range communication device further comprises a near field magnetic induction (NFMI) module for establishing the communication channel between the transmission unit and the receiving unit. An NFMI module represents a compact, easy, reliable and energy-saving method of establishing a short-range communication between two units and/or devices. Also, no pairing of devices is required when using NFMI modules.

In yet another embodiment, the short-range communication device further comprises a Bluetooth Low Energy module for establishing the communication channel between the transmission unit and the receiving unit. Such a Bluetooth Low Energy module represents a compact, easy, reliable and energy-saving method of establishing a short-range communication between two units and/or devices.

In still a further embodiment, the short-range communication device further comprises an optical module for establishing the communication channel between the transmission unit and the receiving unit through optical signals. For example, the optical signals may comprise infrared (IR) light. Such an optical module represents a compact, easy, reliable and energy-saving method of establishing a short-range communication between two units and/or devices. In particular IR signals help to reduce electro-magnetic interference to the short-range communication device in the presence of electro-magnetic radiation. Such an optical module may require a proximity or distance measurement in order to determine the distance between the users.

In a further embodiment, the predetermined distance of the short-range communication device is in the range of 0,1 to 3,5 m, preferably in the range of 0,5 to 2,5 m. The advantage of such a predetermined distance is that this represents a distance where users could easily talk to each other as natural interaction behavior (NIB), i. e. without any communication device or personal protective equipment or personal protective device.

In one embodiment, the predetermined distance of the short-range communication device is adjustable. The advantage of such an adjustment of the distance is that a set-up according to the user's needs may be achieved thereby.

In another embodiment, the transmission unit and/or the receiving unit of the short-range communication device comprises a proximity sensor which is configured to detect the distance between the transmission unit and the receiving unit. Such a proximity sensor allows to switch the short-range communication devices and its components according to the distance between the components or unit and/or between two users with such a short-range communication device.

In a further embodiment, the volume of the loudspeaker of the receiving unit of the short-range communication device is adjustable. Preferably, the volume is reduced when a user is located close to another user. Such a proximity may be detected by a proximity sensor. Such an adjustable volume helps to provide the required volume for communication of closely spaced users without disturbing other users located further away.

In still a further embodiment, the receiving unit is configured such that no audio signal is played at or below a specific adjustable distance relative to each other. For example, if the distance is adjusted to 1 m, no audio signal is played if the transmission unit and the receiving unit are located closer to each other than 1 m. Such an arrangement may require a proximity sensor or another distance measurement between the units, if the distance is not measured by the short-range communication device as such. Such a receiving unit may help to reduce echoes or feedbacks which may annoy or deflect the user when hearing his own voice. Alternatively, the short-range communication device may comprise an anti-feedback means to prevent echoes or feedback.

In one embodiment of the method of establishing a short-range communication, at least one of the at least two short-range communication devices is attached to a personal protective equipment or personal protective device. The advantage of such an attachment is that users in a working environment wearing personal protective equipment or devices may enhance the communication between each other.

A short-range communication device according to the present disclosure may be made by arranging a communication module, preferably an NFMI module, on a printed circuit board (PCB) together with the required components to form the transmission unit and the receiving unit, respectively. Placing the so arranged PCB's into a separate housing for the transmission unit and for the receiving unit may provide for robust design which is easy to use.

The invention was described in various embodiments above. It is understood by a person skilled in the art, that one of, several of or all the above-mentioned embodiments can be combined with each other.

The invention will now be described in more detail with reference to the following Figures exemplifying particular embodiments of the invention:

### Brief description of the Figures:

- Fig. 1: is a schematic illustration of the short-range communication device according to an embodiment of the present disclosure;
- Fig. 2: is a schematic functional illustration of the embodiment of the short-range communication device as shown in Fig. 1;
- Fig. 3a: is a front view of the transmission unit of the short-range communication device as shown in Fig. 1 which is attached to a respirator;
- Fig. 3b: is a perspective front view of the transmission unit of the short-range communication device as shown in Fig. 1 which is attached to a respirator in a different way compared to Fig. 3a;
- Fig. 4: is a perspective front view the receiving unit of the short-range communication device with an attachment means according to an embodiment of the present disclosure;
- Fig. 5: is a front view of the receiving unit of another embodiment of the short-range communication device according to an embodiment of the present disclosure;
- Fig. 6: is a perspective view of details of the receiving unit of an embodiment of the short-range communication device according to an embodiment of the present disclosure;
- Fig. 7: is a perspective view of the receiving unit of the short-range communication device according to an embodiment of the present disclosure attached to personal protective equipment;
- Fig. 8: is a perspective view of the receiving unit of the short-range communication device according to an embodiment of the present disclosure attached to different personal protective equipment compared to Fig. 7;
- Fig. 9: is a perspective view of the receiving unit of the short-range communication device according to an embodiment of the present disclosure attached to different personal protective equipment compared to Fig. 7 or 8;
- Fig. 10: is a front view of the receiving unit of the short-range communication device according to an embodiment of the present disclosure attached to different personal protective equipment compared to Fig. 7 to 9;
- Fig. 11: is a schematic front view of two users each with a short-range communication device according to the present disclosure illustrating a first distance between the users;
- Fig. 12: is a schematic front view of two users each with a short-range communication device according to an embodiment of the present disclosure illustrating a second distance between the users;
- Fig. 13: is a schematic front view of four users each with a short-range communication device according to an embodiment of the present disclosure illustrating a first distance between the users;
- Fig. 14: is a schematic front view of three users each with a short-range communication device according to an embodiment of the present disclosure illustrating a first distance between the users;
- Fig. 15: is a schematic front view of five users each with a short-range communication device according to an embodiment of the present disclosure illustrating a first distance between the users;
- Fig. 16: is a schematic front view of four users each with a short-range communication device according to an embodiment of the present disclosure illustrating three users being in a first distance between the users and two users being in a second distance between the users;
- Fig. 17: is a schematic front view of two users each with a short-range communication device according to an embodiment of the present disclosure illustrating the communication between the users and the resulting audio signal;
- Fig. 18: is a schematic front view of three users each with a short-range communication device according to an embodiment of the present disclosure illustrating the communication between the users and the resulting audio signals;

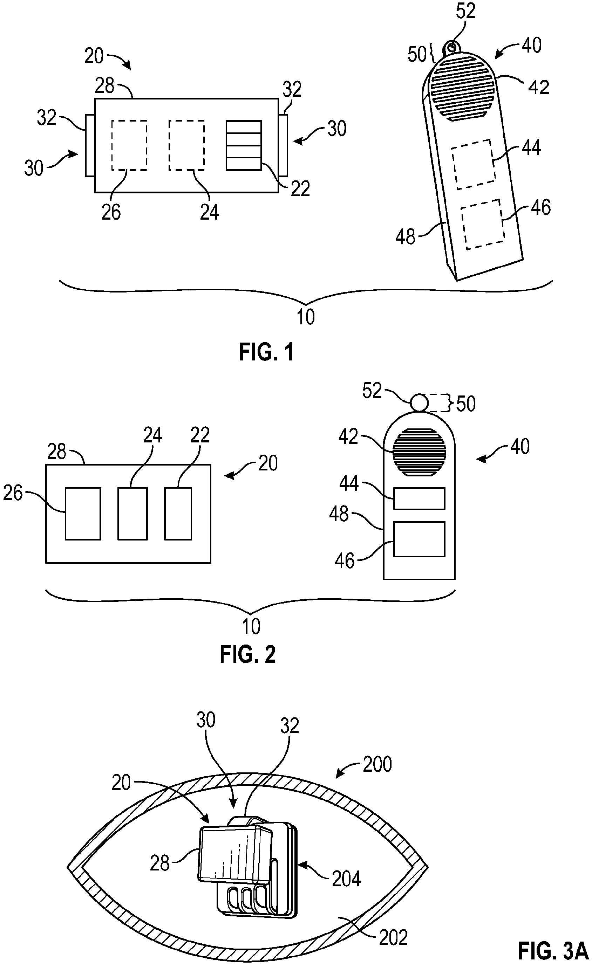

Figs. 1 and 2 show in a schematic top view an embodiment of the short-range device 10 according to the present disclosure, wherein Fig. 2 illustrates the short-range communication device in a rather functional view. The short-range communication device 10 comprises a transmission unit 20 and a receiving unit 40. The transmission unit 20 comprises a microphone 22 for picking up a voice signal from the user (not shown) and a transmitter 24 for wirelessly transmitting the voice signal. The transmission unit 20 preferably further comprises a power supply 26 for powering the transmission unit 20. In some embodiments, as shown, the transmission unit 20 also comprises a housing 28 for encapsulating the components of the transmission unit 20. The transmission unit 20 may further comprise attachment means 30, 32 for attaching the transmission unit to a personal protective equipment or a personal protective device (not shown here). The receiving unit 40 comprises a loudspeaker 52 for playing an audio signal to the user and a receiver 44 for receiving the voice signal as transmitted from the transmitter 24 of the transmission unit 20. The loudspeaker 42 plays the received voice signal as an audio signal to the user such that the user can hear the voice signal picked up by the microphone 22 of the transmission unit 20. The receiving unit 40 preferably further comprises a power supply 46 to power the components of the receiving unit 40. In some embodiments, as shown, the receiving unit 40 also comprises a housing 48 for encapsulating the components of the receiving unit 40. The receiving unit 40 may further comprise attachment means 50, 52 for attaching the transmission unit to a personal protective equipment or a personal protective device (not shown here). The attachment means 50 in the example shown comprises a grommet 52 which may be engaged by a hook or a ring (not shown here) for attachment.

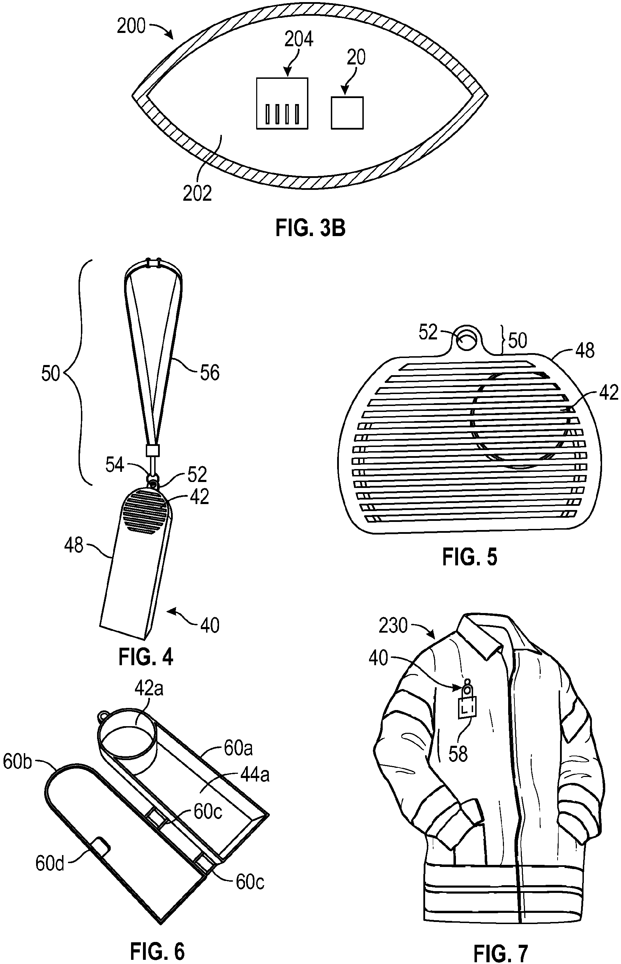

Fig. 3a and 3b illustrate an embodiment of the short-range communication device 10 being attached to a respirator 200, wherein Fig. 3a shows the attachment to an exhalation valve 204 of the respirator 200, whereas Fig. 3b shows the attachment of the short-range communication device 10 to the outer surface 202 of the respirator 200. Fig. 3b also shows the exhalation valve 204 of the respirator 200, although it is conceivable that there is no exhalation vale 204 present at the respirator 200. Thus, the embodiment of Fig. 3b allows an attachment of the short-range device 10 to the respirator 200 even without the presence of an exhalation valve 204. As can be seen in Figs. 3a and 3b, only a part of the short-range communication device 10 is attached to the respirator 200, i. e. the transmission unit 20. Although not shown, it is conceivable to also attach the receiving unit 40 to the respirator 200, although this may not be desired in view of the user's comfort. In Fig. 3a, the attachment of the transmission unit 20 is facilitated by attachment means 30, 32 comprising a mechanical attachment means 30, 32, e. g. a clip 32. As can be seen, the clip 32 engages with the exhalation valve 204 and its housing, respectively. The clip 32 provides for a releasable attachment of the transmission unit to the exhalation valve 204 of the respirator 200, although it is conceivable that either the clip 32 provides for a non-releasable or permanent attachment to the exhalation valve 204 or that e. g. an adhesive is used to provide for such a non-releasable or permanent attachment. Although one clip 32 is shown in Fig. 3a as attachment means 30, it is conceivable to arrange more than one clip 32, for example two clips 32, as attachment means here. In Fig. 3b, the attachment of the transmission unit 20 is facilitated by means of an adhesive (not visible here) adhering to the outer surface 202 of the respirator 200.

The adhesive may provide for a non-releasable or permanent attachment, although it is conceivable that the adhesive may be a repositionable adhesive thereby providing for a releasable attachment. Also, other attachment means are conceivable here, for example mechanical attachment means.

Fig. 4 shows in a perspective view the receiving unit 40 of the short-range communication device 10 according to an embodiment of the present disclosure. Fig. 4 shows the receiving unit 40 as illustrated in Fig. 1 comprising a loudspeaker 42 (only the grid-like cover of which is visible here), a receiver 44 (not visible here) and a power supply 46 (not visible) contained in the housing 48. The receiving unit 40 further comprises an attachment means 50 with a grommet 52, which is engaged by a ring 54 of the lanyard 56. The grommet 52, the ring 54 and the lanyard 56 form the attachment means 50 for attaching the short-range communication device 10 and its receiving unit 40, respectively, to a user, i. e. the user wears the lanyard around the neck.

Fig. 5 shows in a front view the receiving unit 40 of the short-range device 10 according to an embodiment of the present disclosure. The receiving unit 40 as shown here differs from the receiving unit as shown in Figs. 1 or 4 in that the shape of the housing 48 and the arrangement of the grid cover above the loudspeaker 42 is slightly different here. The receiving unit 40 as shown here comprises the above-mentioned components or units, i. e. the loudspeaker 42, the receiver 44 and the power supply 46, as well (although not shown here for the reason of simplification). As can be seen from Fig. 5, the receiving unit 40 also comprises an attachment means 50 with a grommet 52 engageable, e. g. by a ring 54 of a lanyard as shown in Fig. 5 (not shown here).

Fig. 6 shows in a perspective view details of the receiving unit 40 as shown in Figs. 1 and 4. The housing 48 of the receiving unit 40 comprises a base part 60a and a lid 60b connected by two living hinges 60c such that swiveling of the lid 60b onto the base part 60a is facilitated for closing or opening of the housing 48. The base part 60a comprises a compartment 42a for the loudspeaker 42 (not shown here) as well as a compartment 44a for the receiver 44 and the power supply 46 (both not shown here). The lid 60b comprises a closure 60d engaging with the base part 60a to facilitate hold down of the lid 60b onto the base part 60a to prevent unwanted opening of the housing 48. The lid 60b may comprise a grid-like cover above the loudspeaker 42, both of which is not illustrated here.

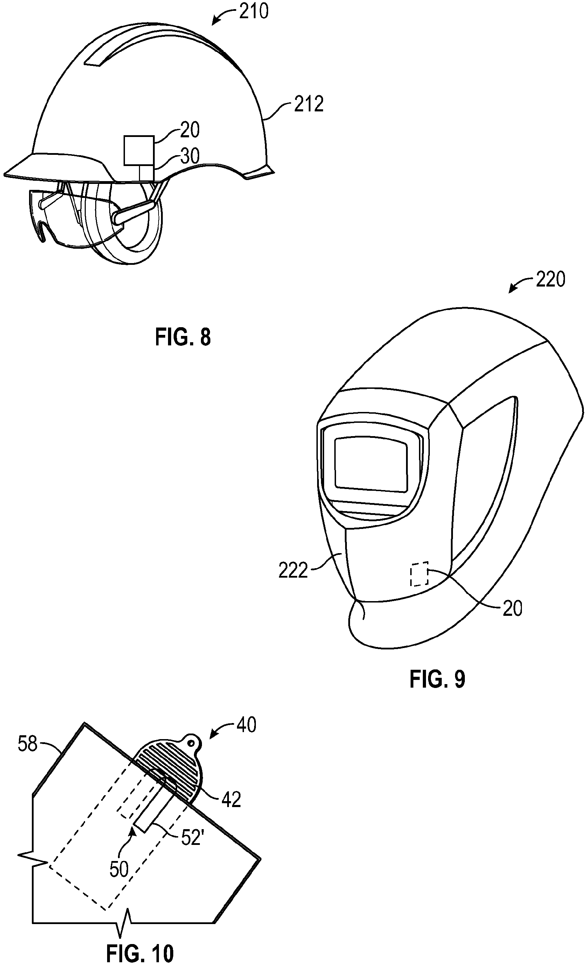

Fig. 7 shows in a perspective view the receiving unit 40 of the short-range communication device 10 according to an embodiment of the present disclosure. The receiving unit 40 is similar to the one as shown in Figs. 1, 2 and 4 and is attached in the example shown to a personal protective equipment 230. In the example shown, the personal protective equipment 230 is formed as a protective jacket 230 comprising a pocket 58 to which the receiving unit 40 is attached, preferably partially inserted into the pocket 58. The receiving unit 40 may be designed such that no attachment means is necessary to keep the receiving unit 40 in a position such that it at least partially protrudes from the pocket 58, i. e. the receiving unit 40 may have a sufficient length extension. However, the receiving unit 40 may comprise an attachment means 50 (not shown here) being formed as a clip 52' or clamp 52' (both not shown here, see Fig. 10 for more details) engaging with the pocket 58. Alternatively, the attachment means 50 may comprise an adhesive for adhering to the surface of the pocket 58 to facilitate attachment of the receiving unit 40 to the protective jacket 230. Such an attachment may provide for a suitable positioning for the receiving unit 40 with its loudspeaker 42 (not shown here) to enable the user (not shown) to hear the audio signal played by the loudspeaker 42 well enough.

Fig. 8 shows in a perspective view the transmission unit 20 of the short-range communication device 10 according to an embodiment of the present disclosure. The transmission unit 20 is similar to the one as shown in Figs. 1 and 2 and is attached in the example shown to a personal protective equipment or personal protective device 210 such as a protective helmet 210. The protective helmet 210 comprises a shell 212 which is engaged by the attachment means 30 of the transmission unit 20. The attachment means 30 may be formed as a clip or clamp engaging with the shell 212 or may comprise an adhesive for adhering to the outer surface of the shell 212 to facilitate attachment of the transmission unit 20 to the protective helmet 210. Such an attachment may provide for a suitable positioning for the transmission unit 20 with its microphone 22 (not shown here) in order to facilitate a reasonably good pick-up of the voice signal of the user (not shown here).

Fig. 9 shows in a perspective view the transmission means 20 of the short-range communication device 10 according to an embodiment of the present disclosure. The transmission unit 20 is similar to the one as shown in Figs. 1 and 2 and is attached in the example shown to a personal protective equipment or personal protective device 220 such as a welding shield 220. The welding shield 220 comprises a shell 222 to which the transmission unit 20 is attached, preferably to the inner surface thereof, by the attachment means 30. The attachment means 30 may be formed as a clip or clamp engaging with the shell 222 or may comprise an adhesive for adhering to the inner surface of the shell 222 to facilitate attachment of the transmission unit 20 to the welding shield 220. Such an attachment may provide for a suitable positioning for the transmission unit 20 with its microphone 22 (not shown here) in order to facilitate a reasonably good pick-up of the voice signal of the user (not shown here).

Fig. 10 shows in a front view the receiving unit 40 of the short-range communication device 10 according to an embodiment of the present disclosure and a detail of a personal protective equipment 230 as shown in Fig. 7 in more detail. As shown in Fig. 7, the personal protective equipment 230, to which the receiving unit 40 is attached, is formed as a protective jacket 230. The receiving unit 40 is similar to the one as shown in Figs. 1 and 4, except that the attachment means 50 is different. In the embodiment shown, the receiving unit 40 comprises an attachment means 50 which is formed as a clip 52'. As shown, the receiving unit 40 is attached to a part of a personal protective equipment, e. g. a jacket or similar clothing comprising a pocket 58, into which the receiving unit 40 has been partially inserted for attachment. The clip 52' facilitates on the one hand attachment to the clothing comprising the pocket 58 and ensures on the other hand that the receiving unit is kept in a position within the pocket 58 such that the grid cover of the loudspeaker 42 protrudes from of the pocket 58. The user (not shown) is enabled thereby to hear the audio signal played by the loudspeaker 42 well enough.

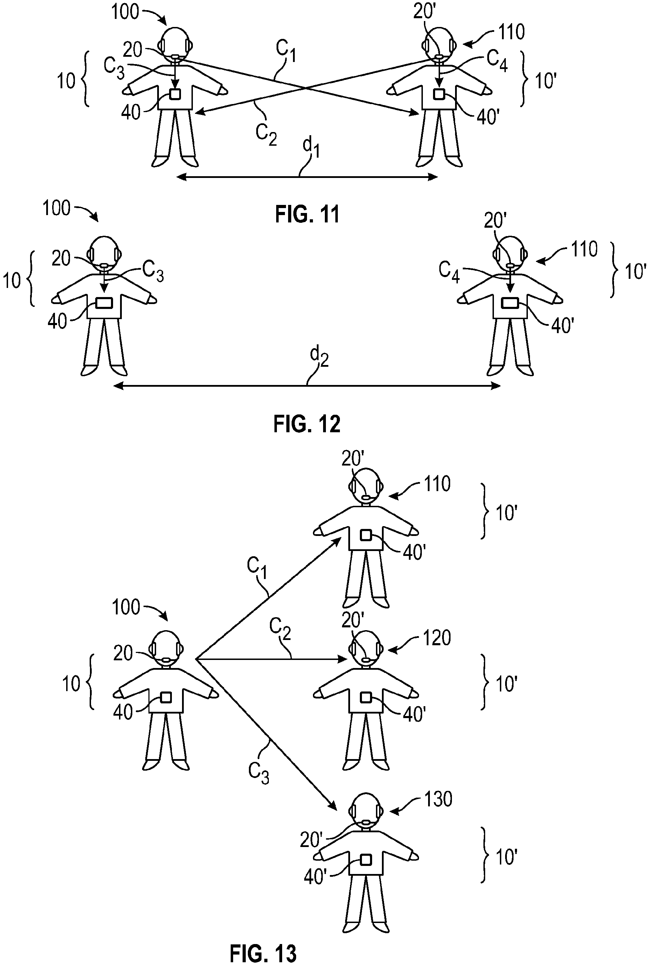

Fig. 11 shows in a schematic functional view two users 100, 110 each with a short-range communication device 10, 10' according to an embodiment of the present disclosure. The short-range communication devices 10, 10' each comprise a transmission unit 20, 20' and a receiving unit 40, 40', each of which are attached to the users 100, 110 and personal protective equipment or devices of the users 100, 110, respectively, by suitable attachment means (not shown here). The users 100, 110 are spaced by a distance d1, for example, 1,5 m. As outlined above, the predetermined distance may be in the range of 0,1 to 3 m, here 3 m. As the distance d1 is at or below the predetermined distance, the transmission units 20, 20' and the receiving units 40, 40' establish a communication channel between each other. In other words, a communication channel is established between the transmission units 20, 20' and the receiving units 40, 40'. This includes that one transmission unit 20, 20' established a communication channel with more than one of the receiving units 40, 40', in the example shown with the two receiving units 40, 40'. Such a communication is illustrated with arrows labelled c1 and c3. Furthermore, this includes that one receiving unit 40, 40' established a communication channel with more than one of the transmission units 20, 20', in the example shown with the two transmission units 20, 20'. Such a communication is illustrated with arrows labelled c2 and c4. In other words, one transmission unit 20, 20' may send voice signals to more than one receiving unit 40, 40', i. e. two receiving units 40, 40' in the example shown, and one receiving unit 40, 40' may receive voice signals from more than one transmission unit 20, 20', i. e. two transmission units 20, 20' in the example shown. As described above, an anti-feedback means may be present to suppress that the user 100 hears a delayed echo of his own voice signal from the receiving unit 40 while speaking, which may otherwise annoy or deflect the user 100.

Fig. 12 shows in a schematic front view a scenario of two users 100, 110 similar to the scenario as shown in Fig. 11, except that the distance d2 between the two users has been increased compared to the distance d1 as illustrated in Fig. 11. The distance d2 between the users 100, 110 here is 5 m and thus, is larger than the above-mentioned predetermined distance of 3 m. Consequently, as laid out above, the two short-range communication devices 10, 10' with their transmission units 20, 20' and their receiving units 40, 40' are not in communication with each other because of the distance d2 being greater than the predetermined distance of 3m. Only the transmission unit 20 and the receiving unit 40 of one short-range communication device 10 establish a communication channel with each other as illustrated by an arrow labelled c3 as these are arranged at a distance closer than the predetermined distance. Similarly, only the transmission unit 20' and the receiving unit 40' of the other short-range communication device 10' establish a communication channel with each other as illustrated by an arrow labelled c4 as these are arranged at a distance closer than the predetermined distance.

Fig. 13 shows in a schematic front view a scenario of four users 100, 110, 120, 130 each wearing short-range communication devices 10, 10'each comprising transmission units 20, 20' and each comprising receiving units 40, 40'. Each of the users 110, 120, 130 are spaced from the user 100 by a distance being at or below the predetermined distance (not indicated here). Consequently, the transmission unit 20 of the user 100 establishes a communication channel with the receiving units 40' of the users 110, 120, 130 as illustrated by arrows labelled c1, c2, c3. The transmission unit 20 of the short-range communication device 10 of the user 100 may also establish a communication channel to the respective receiving unit 40 of the short-range communication devices 10 (as illustrated in Figs. 11 and 12 by the arrow labelled c3), which was omitted here for simplification. In turn, the transmission unit 20' of the short-range communication device 10' of the users 110 or of the user 120 or of the use 130 may also establish a communication channel to the respective receiving unit 40' of the short-range communication devices 10' (as illustrated in Figs. 11 and 12 by the arrow labelled c4), which was also omitted here for simplification.

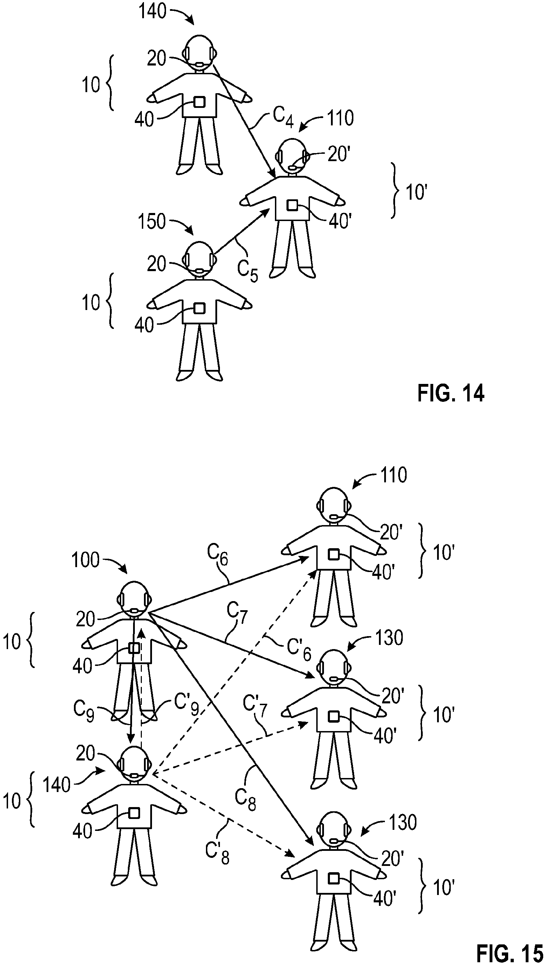

Fig. 14 shows in a schematic front view a scenario of three users 110, 140, 150 each wearing short-range communication devices 10, 10' each comprising transmission units 20, 20' and each comprising receiving units 40, 40'. Each of the users 110, 140, 150 are spaced from the user 100 by a distance being at or below the predetermined distance (not indicated here). Consequently, the each of the transmission units 20 of the users 140, 150 establish a communication channel with the receiving unit 40' of the user 110 as illustrated by arrows labelled c4, c5. In other words, the receiving unit 40' of the user 110 is in communication with the two transmission units 20 of the user 140, 150 and receives voice signals therefrom. The transmission unit 20 of the short-range communication device 10 of the user 140 or of the user 150 may also establish a communication channel to the respective receiving unit 40 of the short-range communication devices 10 (as illustrated in Figs. 11 and 12 by the arrow labelled c3), which was omitted here for simplification. In turn, the transmission unit 20' of the short-range communication device 10' of the user 110 may also establish a communication channel to the respective receiving unit 40' of the short-range communication devices 10' (as illustrated in Figs. 11 and 12 by the arrow labelled c4), which was also omitted here for simplification.

Fig. 15 shows in a schematic front view a scenario with five users 100, 110, 120, 130, 140 each wearing a short-range communication device 10, 10' according to the present disclosure each comprising a transmission unit 20, 20' and a receiving unit 40, 40'. Each of the short-range communication devices 10, 10' is attached to a user 100, 110, 120, 130, 140 as outlined above. In the embodiment shown, all users 100, 110, 120, 130, 140 are in the same distance to each other and this distance is at or below the predetermined distance at which a communication channel is established between the short-range communication device 10, 10'. Although each of the short-range communication devices 10, 10' is in a distance to the other short-range communication devices 10, 10', only the short-range communication device 10 of the user 100 has established a communication channel with the short-range communication device 10, 10' of the users 110, 120, 130, 140. This is indicated by the arrows (with a solid line) labelled c6, c7, c8, c9. In turn, the short-range communication device 10 of the user 140 has not established at this time a communication channel with the short-range communication devices 10' of the users 110, 120, 130. This is indicated by the arrows (with a dotted line) labelled c6', c7', c8', c9'. This may be achieved by an electronic control which may be switched manually or automatically. For example, if one user starts establishing a communication channel with his short-range communication device 10 to one or more of the other short-range communication devices 10, 10' of the users 110, 120, 130, 140, no further communication channel from other short-range communication devices 10, 10' will be established at this time. Thereby, a prioritization is achieved in which short-range communication device 10, 10' of the user 100 only communicates the other short-range communication device 10, 10' of the users 110, 120, 130, 140. It is to be noted, that there is a communication channel established between the short-range communication devices 10 of the user 100 and of the user 140, but this is actually done originating from the short-range communication device 10 of the user 100, and not originating from the short-range communication device 10 of the user 140, because of the prioritization. As mentioned above, an anti-feedback means may be present to suppress that the user 100 hears a delayed echo of his own voice signal from the receiving unit 40 while speaking, which may otherwise annoy or deflect the user 100. Also, it is conceivable that groups or clusters of users are formed, for example, by software embedded into the short-range communication devices, in order to facilitate the prioritization.

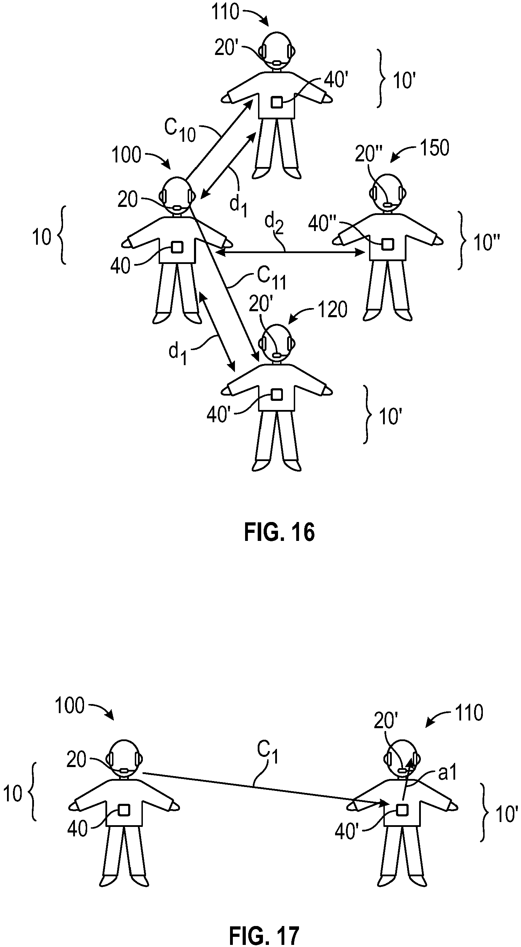

Fig. 16 is a schematic front view of a scenario with four users 100, 110, 120, 150 each wearing a short-range communication device 10, 10' (not shown here for simplification) according to the present disclosure each comprising a transmission unit 20, 20', 20" and a receiving unit 40, 40', 40". The scenario shown here is a combination of the scenarios as depicted in Fig. 11, where the two users 100, 110 are spaced at a distance d1, and in Fig. 12, where the two users 100, 110 are spaced at a distance d2. As outlined above for the Figs. 11 and 12, the distance d1 is at or below the predetermined distance at which a communication channel is established between the short-range communication device 10, 10', whereas the distance d2 is greater than the predetermined distance, so that no communication channel is established for the users spaced at distance d2. In the embodiment shown in Fig. 16, the user 100 is spaced from each of the users 110, 120 by the distance d1, whereas the user 100 is spaced from the user 150 by the distance d2. Consequently, a communication channel is established between the short-range communication devices 10, 10' of the users 100, 110 on the one hand (illustrated by the arrow labelled c10) and of the users 100, 120 on the other hand (illustrated by the arrow labelled c11) because of the distance d1. In contrast thereto, no communication channel is established between the short-range communication devices 10, 10" of the users 100, 150 because of the distance d2.

Fig. 17 shows in a schematic front view a scenario similar to the scenario as shown in Fig. 11, i. e. where the two users 100, 110 are spaced apart by a distance d1 (not shown here), so that a communication channel is established between the short-range communication devices 10, 10' of the users 100, 110 as illustrated by the arrow labelled with c1. In Fig. 17, it is shown that the user 110 hears the audio signal a1 as played by the loudspeaker 42' (not shown here) of the receiving unit 40' of the user 110 representing the voice signal captured by the microphone 22 of the transmission unit 20 of the short-range device 10 of the user 100.

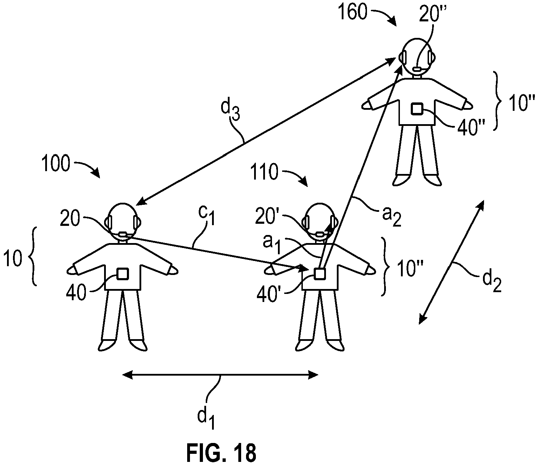

Fig. 18 shows in a schematic front view a scenario with three users, which is similar to the scenario as shown in Fig. 17 with users 100, 110, except that a further user 160 is present. As outlined above already for Fig. 17, the users 100, 110 as shown here are spaced apart by a distance d1, which is at or below the predetermined distance, so that the short-range devices of the users 100, 110 have established a communication channel to each other. As can be seen in Fig. 18, the users 100, 160 are spaced apart by a distance d3 being greater than the predetermined distance of 3 m, e. g. d3 may be 5 m, so that no communication channel is established between the short-range devices 10, 10" of the users 100, 160. As depicted here, the user 110 hears the audio signal a1 played by the loudspeaker 42' of the short-range communication device 10' of the user 110 representing the voice signal as captured by the microphone 22 (not shown here) of the transmission unit 20 of the short-range device 10 of the user 100. The users 110, 160 may be spaced by a distance d2 greater than the predetermined distance so that no communication channel is established between the short-range devices 10', 10" of the users 110, 160. However, the audio signal played by the loudspeaker 42' of the receiving unit 40' of the user 110 may be sufficiently loud so that the user 160 can hear it which is illustrated by the arrow labelled a2. This would enable the user 160 to hear the voice signal of the user 100 captured by the transmission unit 20 and send to the receiving unit 40' of the user 110. In this scenario, it is actually irrelevant whether there is a communication channel established between the short-range device 10', 10" of the users 110, 160 or not.

## Claims

1. A short-range communication device (10, 10', 10") being attachable to a personal protective equipment or a personal protective device (200, 210, 220, 230), the short-range communication device (10, 10', 10") comprises
a. a transmitting unit (20, 20', 20") comprising
i. a microphone (22, 22', 22") for picking up a voice signal of a user (100, 110, 120, 130, 140, 150, 160) and
ii. a transmitter (24, 24', 24") configured to wirelessly transmit the voice signal,
b. a receiving unit (40, 40', 40") comprising
i. at least one loudspeaker (42, 42', 42") for playing an audio signal to the user (100, 110, 120, 130, 140, 150, 160) and
ii. a receiver (44, 44', 44") configured to receive the voice signal,
- wherein the transmitter (24, 24', 24") is configured to wirelessly transmit the voice signal to the receiver (44, 44', 44"),
- wherein the receiver (44, 44', 44") is configured to receive a voice signal transmitted from the transmitter (24, 24', 24"),
- wherein the transmission unit (20, 20', 20") and the receiving unit (40, 40', 40") are configured to establish a communication channel between each other at a distance relative to each other which is equal to or less than a predetermined distance.

2. The short-range communication device (10, 10', 10") according to claim 1, wherein the transmission unit (20, 20', 20") and/or the receiving unit (40, 40', 40") are each contained in a separate housing (28, 48).

3. The short-range communication device (10, 10', 10") according to any one of the claims 1 or 2, wherein the transmission unit (20, 20', 20") and/or the receiving unit (40, 40', 40") comprises attachment means (30, 32, 50, 52, 52') for attaching the transmission unit 20, 20', 20") and/or the receiving unit (40, 40', 40") to a personal protective equipment or a personal protective device (200, 210, 220, 230), wherein the attachment means (30, 32, 50, 52, 52') preferably comprise mechanical fasteners, adhesive fasteners or a combination thereof.

4. The short-range communication device (10, 10', 10") according to any one of the preceding claims, wherein the transmission unit (20, 20', 20") is attached to a personal protective equipment or personal protective device (200, 210, 220, 230) spaced apart from the receiving unit (40, 40', 40").

5. The short-range communication device (10, 10', 10") according to any one of the preceding claims, wherein the transmission unit (20, 20', 20") is attached to a respirator (200), preferably to the outer surface (202) of the respirator (200).

6. The short-range communication device (10, 10', 10") according to any one of the preceding claims, wherein the transmission unit (20, 20', 20") and/or the receiving unit (40, 40', 40") is attached to a welding shield (220), preferably to the inner surface of the welding shield (220).

7. The short-range communication device (10, 10', 10") according to any one of the preceding claims, wherein the transmission unit (20, 20', 20") and/or the receiving unit (40, 40', 40") is attached to a protective helmet (210).

8. The short-range communication device (10, 10', 10") according to any one of the preceding claims, wherein the transmission unit (20, 20', 20") and/or the receiving unit (40, 40', 40") is attached to a protective jacket (230), preferably to the outer surface of the protective jacket (230).

9. The short-range communication device (10, 10', 10") according to any one of the preceding claims, wherein the receiving unit (40, 40', 40") is spaced from the user's ear.

10. The short-range communication device (10, 10', 10") according to any one of the preceding claims, further comprising a near field magnetic induction (NFMI) module (24, 24', 24", 44, 44', 44") for establishing the communication channel between the transmission unit (20, 20', 20") and the receiving unit (40, 40', 40").

11. The short-range communication device (10, 10', 10") according to any one of the preceding claims, wherein the predetermined distance is in the range of 0,1 to 3,5 m, preferably in the range of 0,5 to 2,5 m.

12. The short-range communication device (10, 10', 10") according to any one of the preceding claims, wherein the predetermined distance is adjustable.

13. A short-range communication system comprising at least two short-range communication devices (10, 10', 10") according to any one of claims 1 to 12, wherein the at least two short-range communication devices (10, 10', 10") are in communication with each other being at a distance relative to each other which is equal to or less than a predetermined distance and wherein the at least two short-range communication devices (10, 10', 10") are not in contact with each other being at a distance relative to each other which is larger than the predetermined distance.

14. Method of establishing a short-range communication,
the method comprising the steps of
a. providing at least two short-range communication devices (10, 10', 10") each comprising
i. a transmitting unit (20, 20', 20") comprising
• a microphone (22, 22', 22") for picking up a voice signal of a first user (100, 110, 120, 130, 140, 150, 160) and
• a transmitter (24, 24', 24") configured to wirelessly transmit the voice signal,
ii. a receiving unit (40, 40', 40") comprising
• at least one loudspeaker (42, 42', 42") for playing an audio signal to the user (100, 110, 120, 130, 140, 150, 160) and
• a receiver (44, 44', 44") configured to receive the voice signal,
∘ wherein the transmitter (24, 24', 24") is configured to wirelessly transmit the voice signal to the receiver (44, 44', 44"),
∘ wherein the receiver (44, 44', 44") is configured to receive a voice signal transmitted from the transmitter (24, 24', 24"),
∘ wherein the transmission unit (20, 20', 20") and the receiving unit (40, 40', 40") are configured to establish a communication channel between each other at a distance relative to each other which is equal to or less than a predetermined distance,
b. establishing a communication channel between the transmission units (20, 20', 20") and the receiving units (40, 40', 40") of the two short-range communication devices (10, 10', 10") to each other at a distance between the short-range voice transmission device (10, 10', 10") that is equal to or less than a predetermined distance.

15. The method according to claim 14, wherein at least one of the at least two short-range communication devices (10, 10', 10") is attached to a personal protective equipment or personal protective device (200, 210, 220, 230).
